# EUROPEAN PATENT APPLICATION

(11) **EP 1 348 399 A1**
(43) Date of publication of application: **01.10.2003**
(21) Application number: 03015005.6
(22) Date of filing: 21.01.2000
(51) Int. Cl.: A61C 13/265, A61C 13/277

(54) **Connection for dental prostheses**

(30) Priority: 21.01.1999 IT MO990004; 15.10.1999 IT MO990224
(62) Divisional of application: 00101163.4
(71) Applicant: Cattaneo, Alessandro, 09124 Cagliari (IT)
(72) Inventor: Cattaneo, Alessandro, 09124 Cagliari (IT)
(74) Representative: Luppi, Luigi

(57) **Abstract**

A connection for dental prostheses comprises a female part (2, 2A) provided with internal coupling surfaces diverging with respect to an intended axis of insertion and suitable to define, when coupling with a respective male part (1, 1A), at least one corresponding friction surface, said female part (2, 2A) being provided with a seat (13C, 83C) arranged to receive elastically yielding coupling means (30, 100), said seat (13C, 83C) being arranged in a region of said female part (2, 2A) opposed to a further region in which said at least one friction surface is provided.

A connection for dental prostheses comprises a male part (1B) provided with external coupling surfaces converging with respect to an intended axis of insertion and suitable to define, when coupling with a respective female part (2B), at least one corresponding friction surface, said male part (1B) being provided with a seat (113C) arranged to receive elastically yielding coupling means (130), said seat (113C) being arranged in a region of said male part (1B) opposed to a further region in which said at least one friction surface is provided.

## Description

The present invention first of all relates to a dental connection with coupling surfaces inclined with respect to an insertion axis of extra-coronal type, suitable for connecting removable prostheses to non-removable prosthetic structures, or for fixing together different types of prostheses, for example implant prostheses.

The known prosthetic connections are difficult to install because they must offer work surfaces perfectly parallel to each other, in order to operate correctly.

Furthermore, the invention concerns the field of the dental implants, wherein the wedge-like connections are rarely used since the extreme precision of the wedge-like coupling makes difficult the positioning of several connections jointed together.

In the wedge-like prosthesis onto natural roots, the differences between the conical patrices onto the roots and the conical matrices in the superstructure are easy corrected by the periodontal movement, with a resulting adjustment caused by the orthodontal movements possible on the natural pillars.

On the contrary, the implants have an ankylosis connection with the bone that supports them, therefore any difference between patrices on implants and matrices on the superstructure would produce tension with resulting risks for the osteo-integration of the implants themselves.

At present, the traditional implanted prostheses are secured to the pillars on implants by systems non-devoid of compromises:
- the prostheses occlusally screwed need the perfect positioning of the implants, since the entry cavity of the transocclusal screw can not be positioned in an anti-aesthetic position;
- the prostheses screwed palatally or lingually do not offer the aesthetical inconveniences of the prostheses screwed transocclusally, but are difficult to manufacture and do not solve the problem of harmful tensions.
- the cemented prostheses, on the contrary, are excellent from an aesthetic point of view and make possible a passive adjustment owing to the thickness of the cement between the stump and the superstructure, but do not allow an easy removal, when necessary.

A reason why the wedge-like connections are not widely used in the field of the dental implants depends on how the female element and the male element that constitute the connection are obtained.

In the dental technology practice, first of all a male part having surfaces inclined according to a preestablished geometry is prepared, thereafter the female part is obtained directly into the superstructure during a process of modeling and fusion, by using the male part as a cast.

This process can cause strains of thermal origin in the piece, that make the piece unusable, once the cooling has occurred.

An object of the present invention is therefore to make the prostheses with connections more economic and functional, particularly to make easier the assembly thereof.

A further object of the invention is to provide a connection, particularly for dental implants, that produces an aesthetical result of high quality without the arising of tensions harmful for the health of the patient.

In a first aspect of the present invention, a connection for dental prostheses is provided, including a male part characterized by outer coupling surfaces converging with respect to an intended axis of insertion and suitable to define, in a coupling with a respective female part, at least one corresponding friction surface capable of assuring a high stability to the connected structures.

Advantageously said male part can include a pillar for endosteal implant.

In a second aspect of the present invention, a connection for dental prostheses is provided, including a female part characterized by internal surfaces diverging with respect to an intended axis of insertion and suitable to define, when coupled with a respective male part, at least one corresponding friction surface capable of assuring a high stability to the connected structures.

Advantageously said female part can include a coping associable to a pillar for endosteal connection.

In an advantageous version said male connection includes at least a groove obtained on a portion of said external coupling surfaces.

In a further advantageous version, two pairs of grooves are present in the male part.

Furthermore, preferably, a first pair of grooves, i.e. that pair closer to the connection with the fixed prosthesis, does not extend across the entire height of the connection: that allows the male connection to be provided in that region, which is designed to bear the greater strength, having a greater whole thickness of the resistant section.

The first pair of grooves defines regions of the connection that are capable of resisting tensional stresses developed during the mastication.

The second pair of grooves defines regions of the connection that are capable of resisting compression stresses. Furthermore the second pair of grooves gives the connection the desired stability of positioning.

It is possible that the at least one groove has converging surfaces, which allows different connections to be mounted in a same prosthetic group, said connections being not required to be perfectly parallel to each other (which often happens due to technical positioning errors) to operate satisfactorily.

It is furthermore provided that coupling means capable of being elastically deformed is incorporated into the female part of the connection and operates during the coupling of the two parts, being compressed between the inclined surface of the male connection opposite to the portion connected to the fixed prosthesis and a facing surface of the female part.

Being the male part characterized by a set of surfaces inclined with respect to each other, a remarkable friction could occur even without the aid of the elastically yielding coupling means, mainly when the connection is supplied of plastic material capable to be calcined and therefore cast by the dental technician.

To prevent the possibility of an excessive friction, the male part can be provided with small protrusions on the upper base (occlusal). The female part is not provided, on the surface mating with the above-mentioned upper base of the male part, with depressions corresponding to the protrusions.

This allows the coupling (wedge-like) of the two parts to be optimised by means of few corrections only in the area of the protrusions on the patrix (male part). In fact, since there are not opposite surfaces parallel to each other, the insertion of the two parts (as it happens in the technique of the wedge-like connections), is passive until the coupling is completed; if elastically yielding coupling means are used there will be a friction between some surfaces even before the coupling of the female part onto the male part.

The male part can include a pair of projecting portions converging in a direction with respect to an insertion axis and a pair of recesses converging in an opposite direction with respect to said axis.

Advantageously the projecting portions and/or the respective recesses include portions of conical surface that preferably extend substantially across the whole length of said male part along said axis.

Each projecting portion of said pair of projecting portions is preferably contiguous to a corresponding recess of said pair of recesses.

Elastically deformable coupling means is advantageously interposed between the male part and the female part.

The elastically deformable coupling means is preferably associated with the female part in a seat provided in a region of said female part different from the region in contact with said pair of projecting portions and said pair of recesses. The elastically deformable coupling means is pressed between the facing surfaces of the male part and the female part so as to keep the insertion of the male part into the female part stable.

This makes possible to obtain very simple wedge-like connections that can be mounted even if errors of mutual angular positioning occur.

In an advantageous version, it is provided that the elastically deformable coupling means is accommodated in a seat obtained in the male part and at least a portion of the coupling means protrudes from the seat for interacting with the female part.

In addition, the female part may be provided with recess means arranged in such a way as to receive the elastically yielding coupling means projecting from said male part.

Therefore, when the matrix is coupled to the patrix, the portion that protrudes from its seat is compressed into the seat, producing an elastic force that contributes to keep the male part and the female part in the correct relative position.

In a preferred version the elastically deformable coupling means is shaped as an open ring and is provided with at least one protrusion, a portion of which projects from a suitable seat provided in the male part for said portion.

Advantageously, two aligned through holes are provided in said male part and said female part so arranged as to receive a screw for fixing said female part to said male part.

In a preferred version, said screw has a stem having sections with different diameters, each section mating with one of said aligned holes. This makes possible to speed up the operations of screwing and unscrewing.

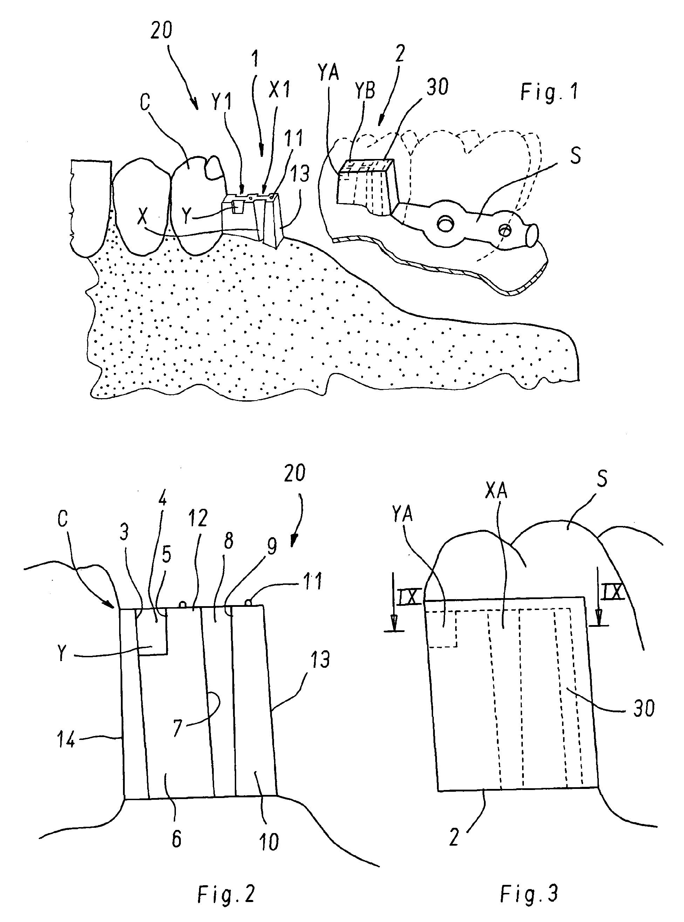

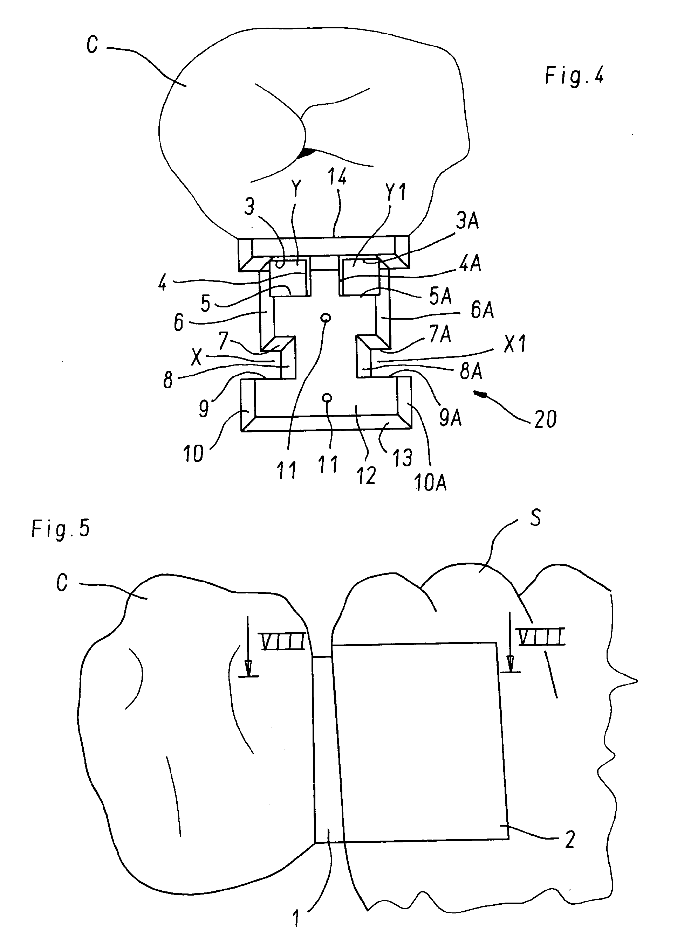

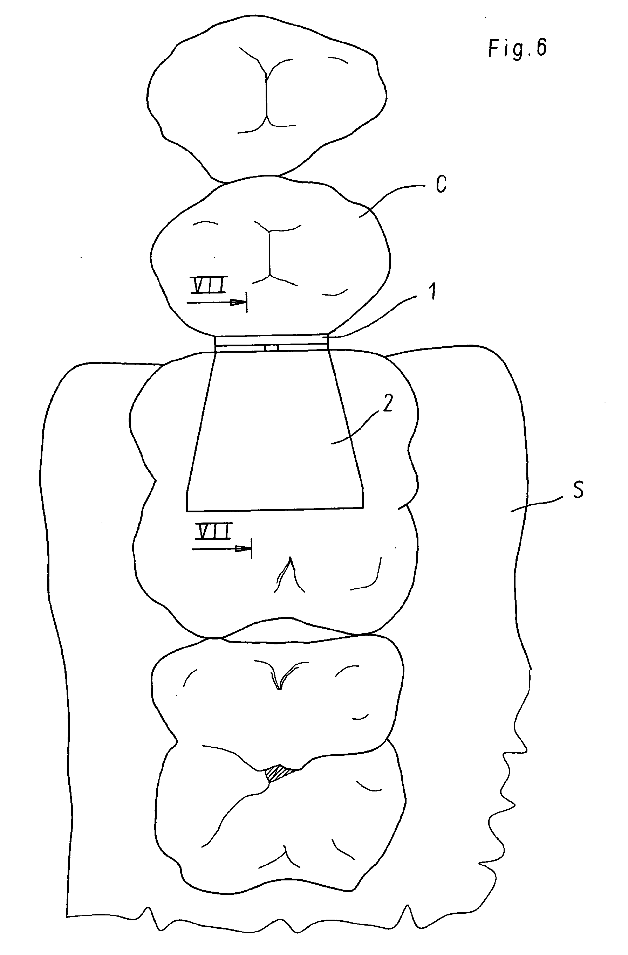

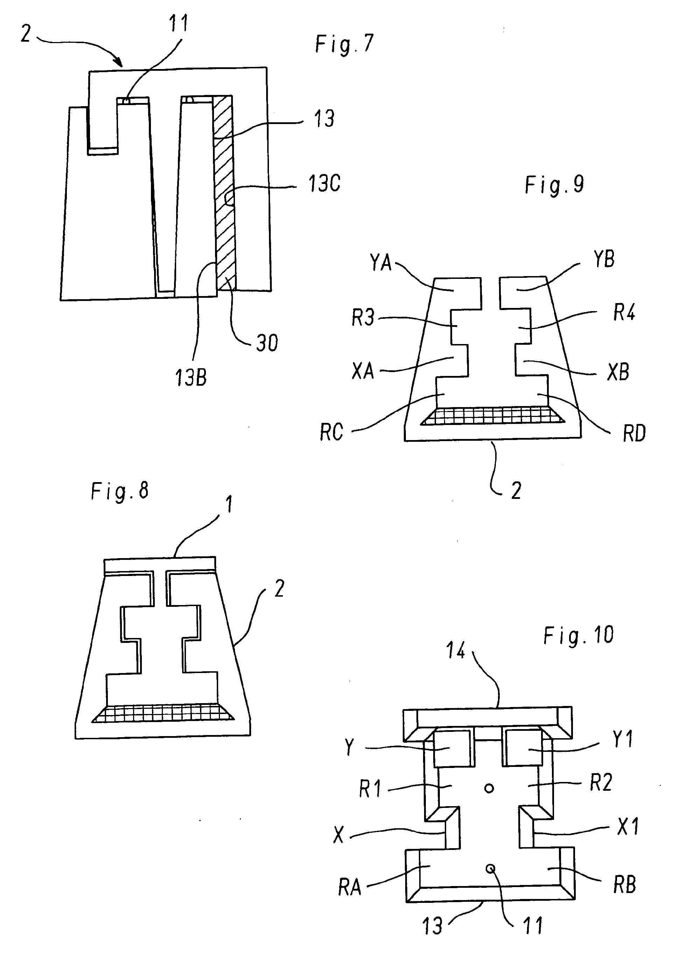

The invention will be better understood and carried out with reference to the enclosed drawings, that illustrate an exemplifying embodiment of the invention, wherein:
Figure 1 is a schematic exploded perspective view showing a fixed prosthesis on which a male connection is installed and a removable prosthesis which is to be connected to the fixed prosthesis through a female connection;
Figure 2 is a side view of a male connection, or patrix;
Figure 3 is a side view of a female connection, or matrix;
Figure 4 is a top view of the male connection of Figure 2;
Figure 5 is a side view of a male connection coupled to the female connection;
Figure 6 is a top view of a male connection coupled to the female connection;
Figure 7 is the section VII-VII of Figure 6;
Figure 8 is the section VIII-VIII of Figure 5;
Figure 9 is the section IX-IX of Figure 3;
Figure 10 is a view as that of Figure 4, but shows the male connection isolated from the prosthetic structure;
Figure 11 is a plan view of a preferred version of a male connection;
Figure 12 is the left side view of Figure 11;
Figure 13 is a top view, partially sectioned, of a preferred version of the whole connection as in Figure 11, coupled to parts of a prosthesis;
Figure 14 is a perspective view of a preferred version of a male connection;
Figure 15 is a perspective view as that of Figure 14, but taken from a different point of view;
Figure 16 is a longitudinal section of a wedge-like implant connection according to the invention, including a male part and a female part;
Figure 17 is a section as that of Figure 16, but showing an alternative version of a connection according to the invention;

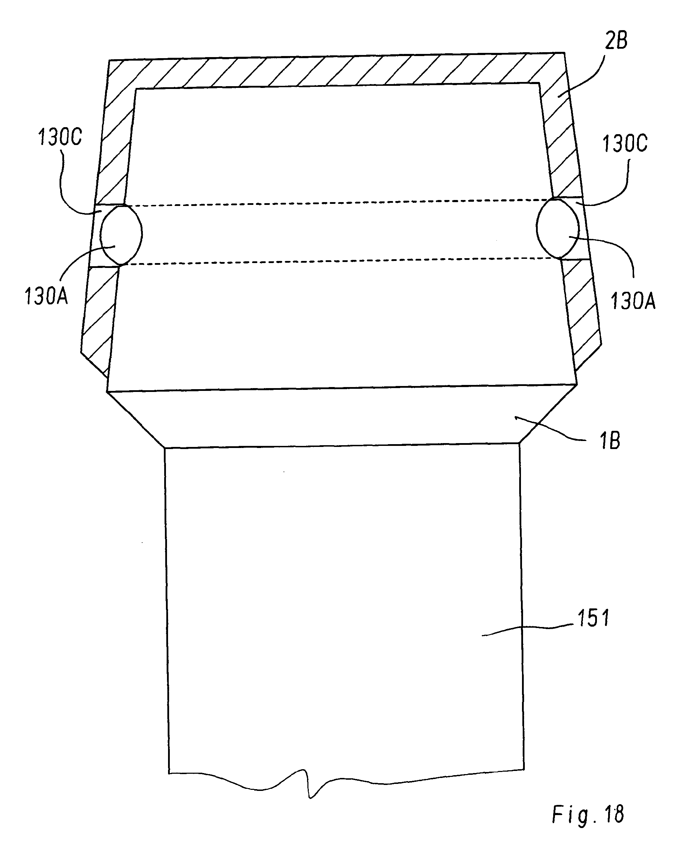

Figure 18 is a longitudinal partial section of a still further version of a connection according to the invention;
Figure 19 is a section as in Figures 16 and 17, but showing a connection using an elastic ring-shaped element;
Figure 20 is a plan view of Figure 19;

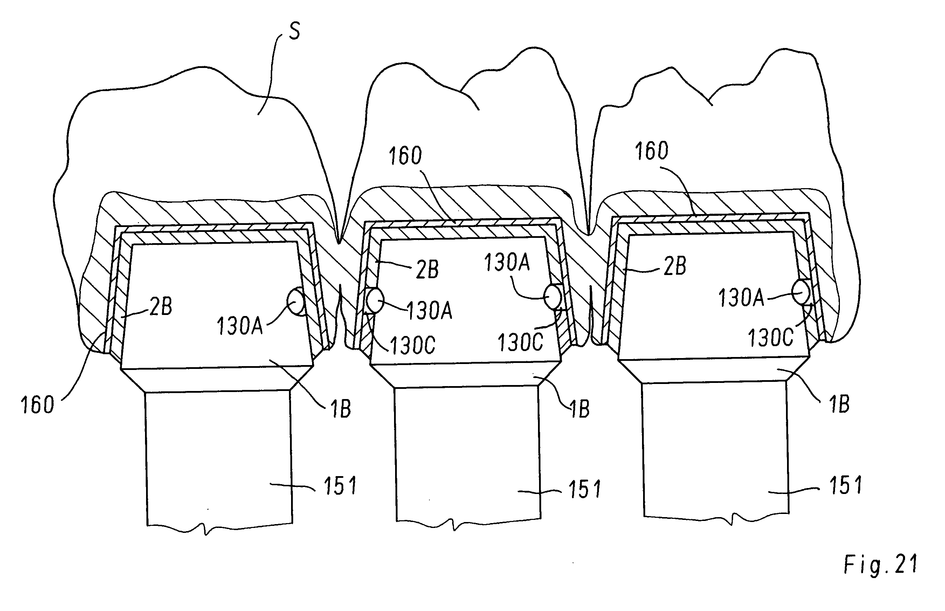

Figure 21 a partial longitudinal section that shows, one near the other, the three versions shown in Figures 16, 18 and 17, respectively;

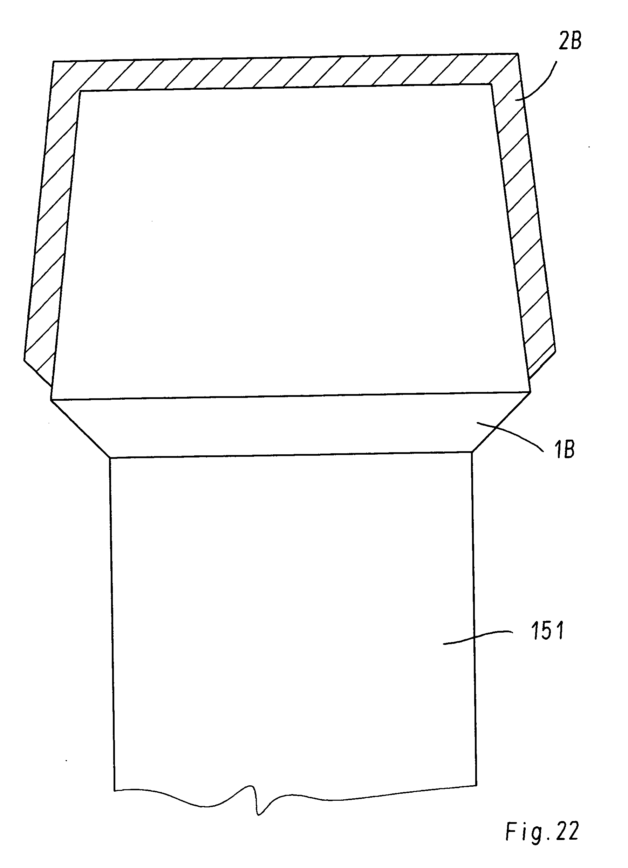

Figure 22 is a partial section of a bone implant on which a pillar wedge-like connection coupled to a coping is fixed;
Figure 23 is a longitudinal section of a connection as that of Figure 22, in a version that is fixed to a bone implant through a gripping screw;
Figure 24 is a longitudinal section as that of Figure 23 in a version that is directly screwed to a bone implant;
Figure 25 is a longitudinal section of a connection according to the invention wherein the connection between the male part and the female part is obtained by means of a transversal through screw;
Figure 26 is a side view of the connection of Figure 25;
Figure 27 is a partial section through the plane XXVVII-XXWII of Figure 26;
With reference to the Figures 1 to 10, the male connection 1 includes a projecting body 20 exhibiting a first pair of grooves Y, Y1 and a second pair of grooves X, X1; the grooves Y, Y1 extend across a portion only of the height of the connection and are close to the surface 14 of connection with the fixed part C of the prosthesis. The grooves X, X1 extend across the whole height of the connection and are close to the surface 13 that is engaged in the coupling with the female connection 2 by the element 30 of elastically yielding material.

All the surfaces of the male connection 1 are inclined with respect to an insertion axis so as to make easier the insertion of the female connection 2; each of the grooves Y, Y1, X, X1 is substantially shaped as a reversed half truncated pyramid, or reversed half truncated cone, reliefs R1, R2, RA and RB being defined between said grooves, each of said reliefs being shaped as a half truncated pyramid or half truncated cone.

The surfaces 4A, 6A, 8A, 10A facing a vestibular side are converging with respect to the surfaces at the opposite side, that is the surfaces 4, 6, 8, 10 of the inner side (lingual or palatal).

The surfaces 5, 5A, 9, 9A facing a medial side are converging with respect to the surfaces of the opposite side, that is the surfaces 3, 3A, 7, 7A of the distal side.

The female part 2 includes reliefs YA, YB, XA, XB that couple with the corresponding grooves Y, Y1 X, X1 of the male part 1 and grooves R3, R4, RC, RD that couple with the corresponding reliefs R1, R2, RA, RB.

The male part 1 is provided with protrusions 11 at the occlusal base 12 which do not correspond to under-reliefs in the female part 2. The female part is provided with a recess 13C that receives an elastically yielding interchangeable element 30 that during the coupling is compressed by the surface 13 of the male connection 1, acting as wedge-like activator.

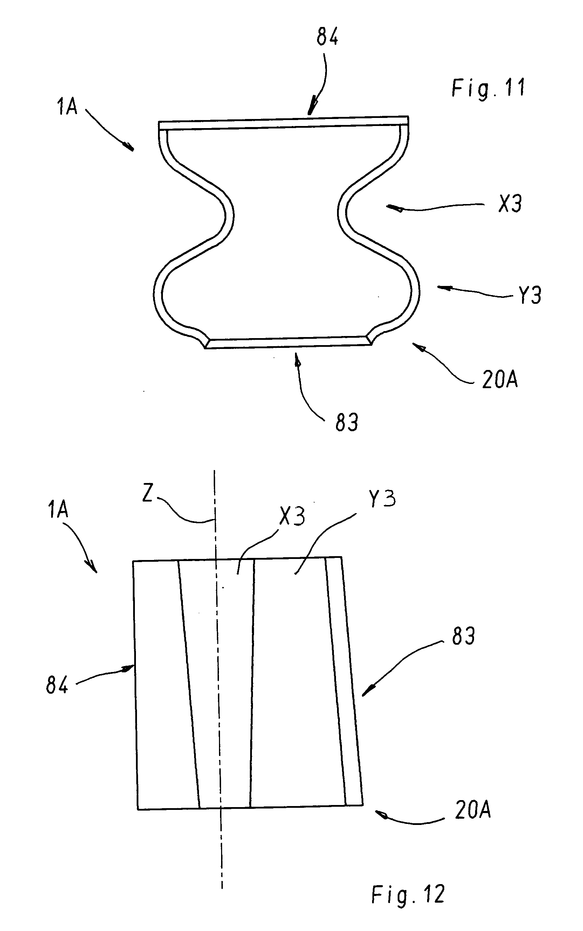

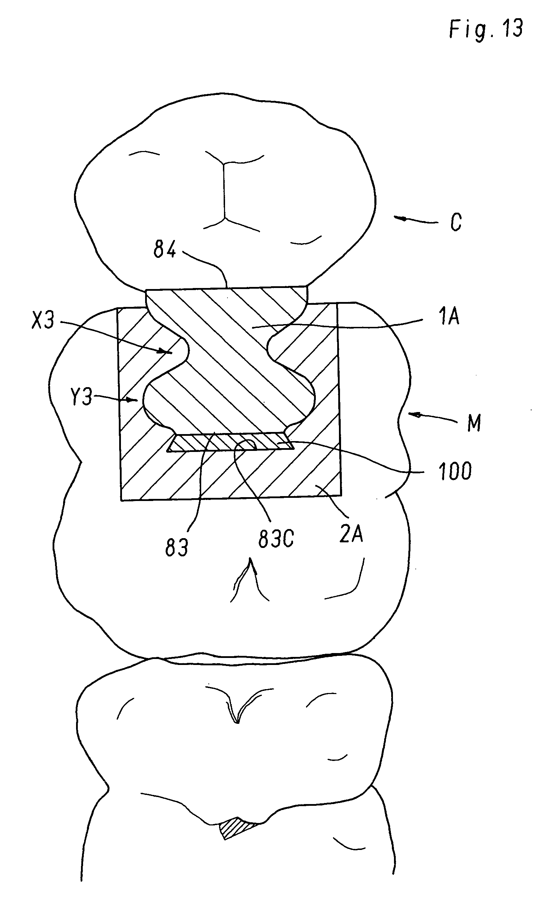

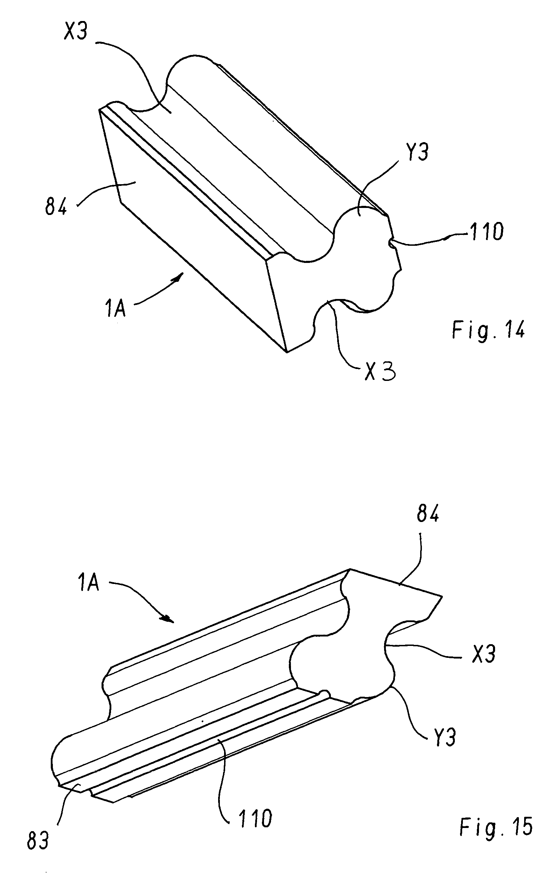

With reference to Figures 11 to 15, a male connection 1A, includes a body 20A showing a pair of grooves X3 shaped as a half truncated cone reversed with respect to an intended axis Z of insertion and a pair of reliefs Y3 shaped as a half truncated cone. A coupling inclined surface 83 is furthermore shown, that during the coupling with the female connection 2A comes in contact with an elastically yielding element 100 arranged in a seat 83C of the female connection 2A.

The surface 84 of the male connection 1A is firmly connected to a portion C of prosthesis. The female connection 2A is firmly connected to another portion M of prosthesis.

The coupling surface 83 is provided with a further groove 110 acting as centring means for a forming core of the elastic yielding element 100 when the female portion 2A of the connection is formed.

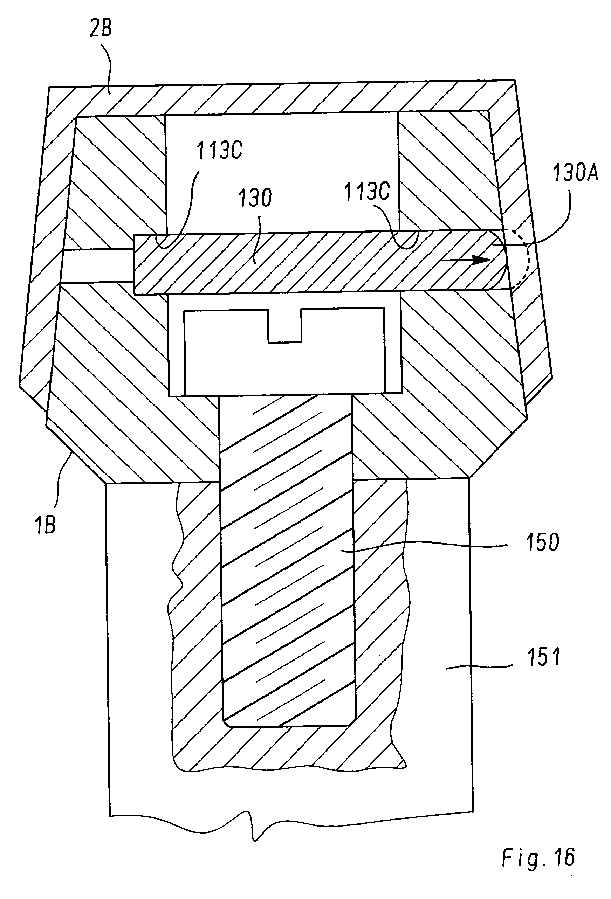

In Figure 16, a male connection 1B is shown shaped as a conical pillar, fixed to an implant structure 151 by means of a gripping screw 150; a seat 113C is provided in said male connection suitable to receive an elastically yielding element 130. In an initial rest position, a portion 130A of the elastically yielding element 130 protrudes from the seat 113C. When the female part 2B is coupled with the male part 1B, the portion 130A of the elastically yielding element 130 is compressed and forced into the seat 113C in such a way as to exert a force onto the male part 1B and the female part 2B, said force keeping the friction surfaces in contact with each other.

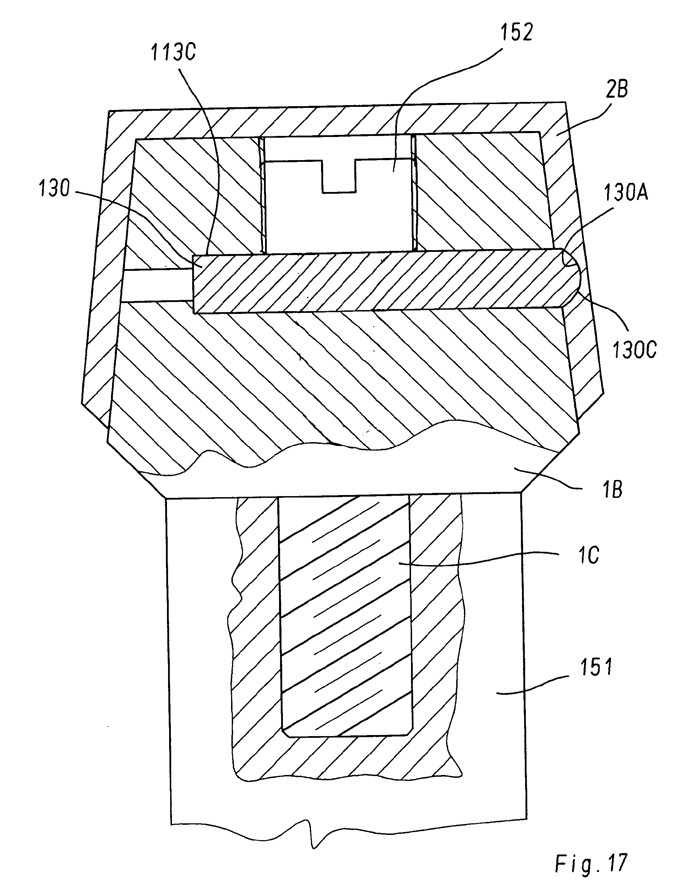

In Figure 17 a male connection 1B is shown having the shape of a conical pillar, provided with a threaded stem 1C and directly screwed to an implant structure 151, in the pillar-shaped male connection 1B a seat 113C is provided suitable to receive an elastically yielding element 130. The female part 2B is provided with a recess 130C suitable to receive the portion 130A of the elastically yielding element 130 protruding from the seat 113C, once the coupling between the above-mentioned female part 2B and the respective male part 1B has occurred. In this case the friction between the portion 130A of the elastically yielding element 130 and the recess 130C cooperates to keep the male part 1B and the female part 2B firmly secured. An adjusting and fixing screw 152 is furthermore provided, acting on which it is possible to change the portion 130A of the elastically yielding element 130 protruding from the seat 113C; consequently it is possible to modify the value of the force transmitted to the recess 130C by the elastically yielding element 130.

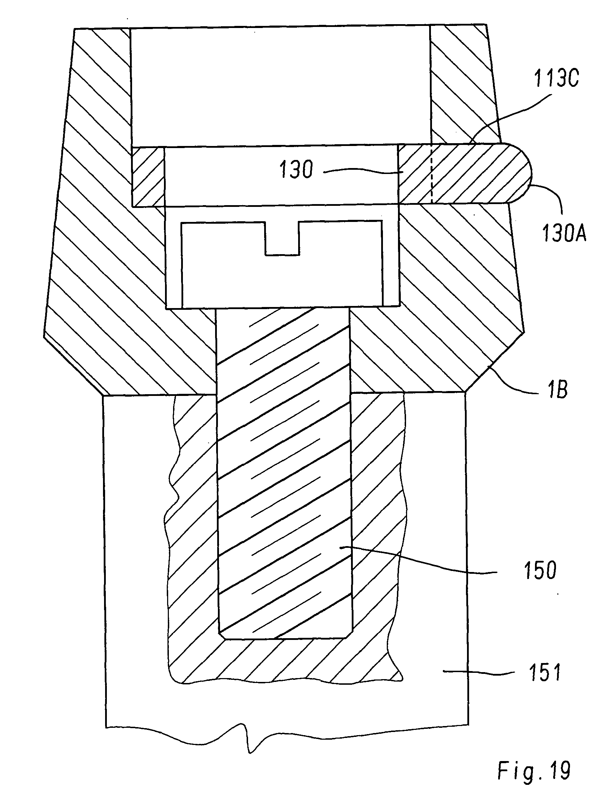

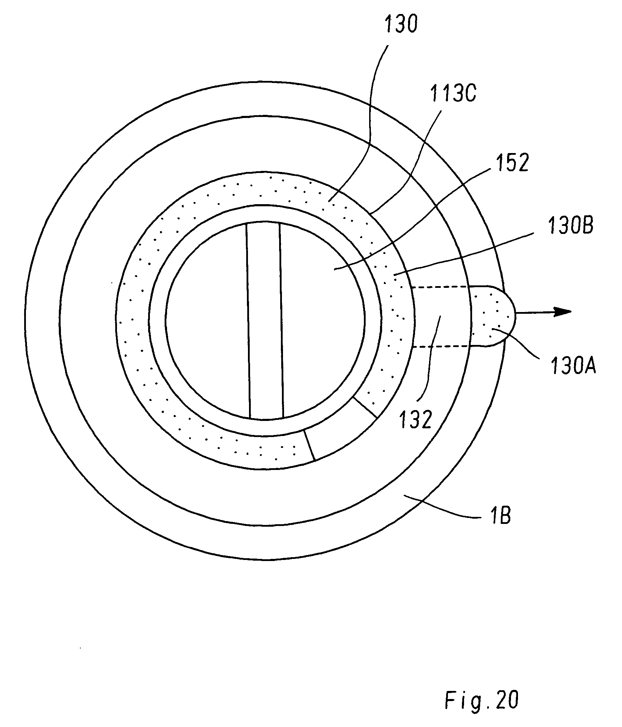

In Figures 19 and 20 a connection similar to that illustrated in Figures 16 and 17 is shown wherein the elastically yielding element 130 includes a body 130B having. an open toroidal shape, broken at a sector of its circumference and provided with at least one protrusion 132. The toroidal-shaped body 130B is arranged in a seat 113C of suitable form; an end portion 130A of said at least one protrusion 132 protrudes from the above-mentioned seat 113C.

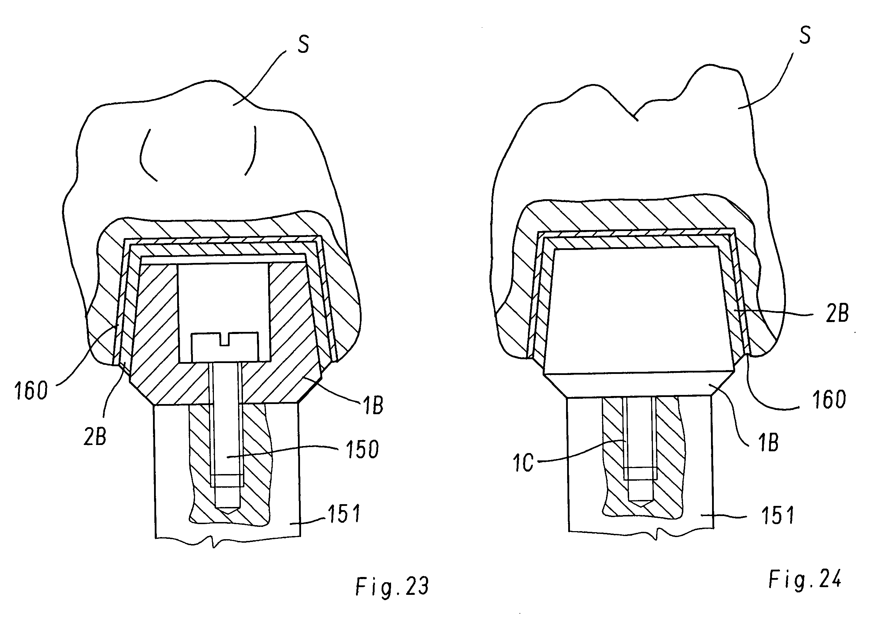

In Figure 23 a wedge-like connection for implants is shown constituted by a pillar male part 1B, connected through gripping screw 150 to an implant structure 151, and a female part 2B to which a prosthetic superstructure S is fixed through a layer 160 of cementing material.

In Figure 24 a wedge-like connection is shown with a prosthetic superstructure S cemented to the female part 2B, similar to that of Figure 23, but having the male part 1B provided with a threaded stem 1C directly screwed on the implant 151.

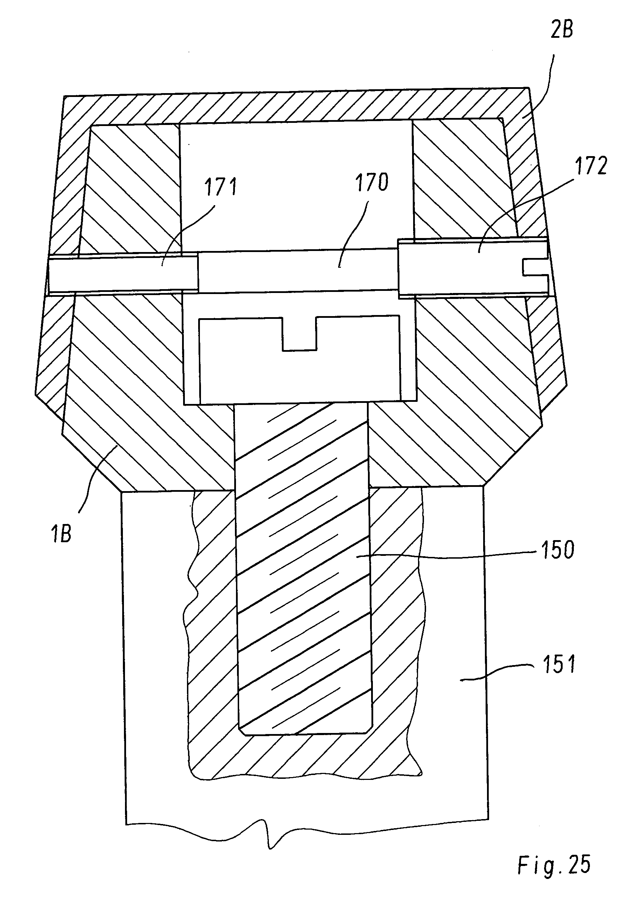

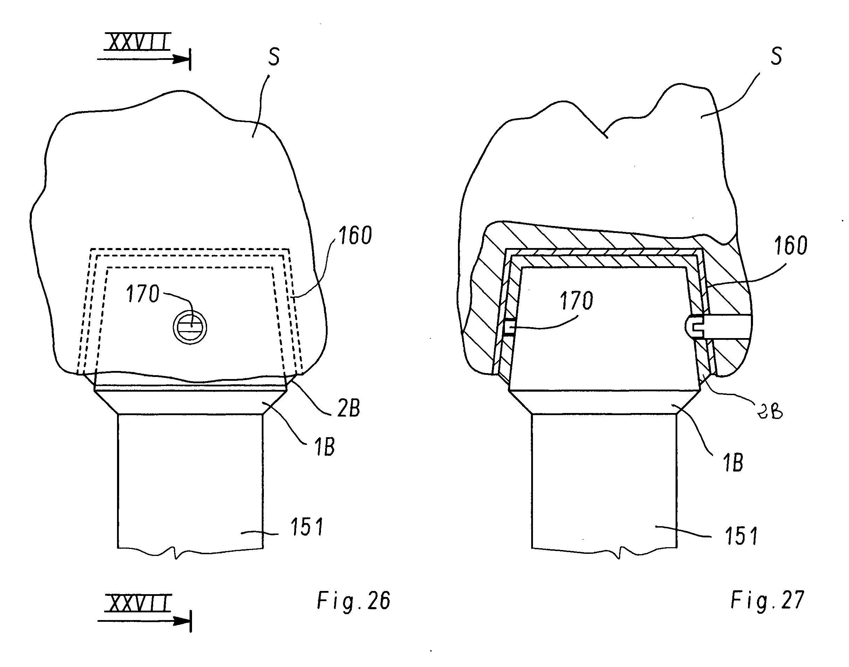

In Figures 25, 26 and 27 a connection for implants is shown wherein the contact between the male part 1B and the female part 2B is assured by the presence of a locking screw 170. The locking screw 170 is characterized by a smaller diameter in the region 171 farthest from the head and by a greater diameter in the region 172 nearest to the head, that allows the operations of screwing and unscrewing to be sped up.

## Claims

1. Connection for dental prostheses, comprising a female part (2, 2A) provided with internal coupling surfaces diverging with respect to an intended axis of insertion and suitable to define, when coupling with a respective male part (1, 1A), at least one corresponding friction surface, said female part (2, 2A) being provided with a seat (13C, 83C) arranged to receive elastically yielding coupling means (30, 100), wherein said seat (13C, 83C) is arranged in a region of said female part (2, 2A) opposed to a further region in which said at least one friction surface is provided.

2. Connection according to claim 1, and further provided with said elastically yielding coupling means (30, 100) received in said seat (13C, 83C) as to press said friction surface against a corresponding further friction surface of said male part (1, 1A).

3. Connection according to claim 1, or 2, wherein said seat (13C, 83C) has a substantially flat shape.

4. Connection according to any one of claims 1 to 3, and further comprising at least one projection provided in a portion of said internal coupling surfaces.

5. Connection according to claim 4, wherein said at least one projection comprises a pair of projections.

6. Connection according to claim 5, wherein said at least one projection comprises a further pair of projections contiguous to said pair of projections.

7. Connection according to claim 5, or 6, wherein said pair of projections is provided with surfaces converging towards a direction with respect to an insertion axis (Z), said pair of projections being contiguous to a pair of grooves converging towards an opposite direction with respect to said axis (Z).

8. Connection according to claim 7, wherein said projections and/or the respective grooves comprise sections of a conical surface.

9. Connection according to any one of claims 4 to 8, wherein said at least one projection does not extend across the entire height of said female part (2, 2A).

10. Connection according to any one of the preceding claims, wherein said female part (2, 2A) is coupled with said male part (1, 1A), said male part (1, 1A) being provided with external coupling surfaces converging with respect to said intended axis of insertion.

11. Connection according to claim 10, wherein said male part (1, 1A) is provided with centring means (110) arranged to centre abutting means of said elastically yielding coupling means (30, 100).

12. Connection according to claim 11, wherein said centring means (110) comprises a groove.

13. Connection according to any one of claims 10 to 12, and further comprising at least one groove (X; X1; Y; Y1; X3) provided on a portion of said external coupling surfaces.

14. Connection according to claim 13, wherein said at least one groove (X; X1; Y; Y1; X3) comprises a pair of grooves (X, X1; Y, Y1; X3).

15. Connection according to claim 14, wherein said at least one groove (X; X1; Y; Y1) comprises a further pair of grooves (Y, Y1; X, X1) contiguous to said pair of grooves (X, X1; Y, Y1).

16. Connection according to claim 14, or 15, wherein said pair of grooves (X3) is provided with surfaces converging towards a direction with respect to an insertion axis (Z), said pair of grooves (X3) being contiguous to a pair of projecting portions (Y3) converging towards an opposite direction with respect to said axis (Z).

17. Connection according to claim 16, wherein said projecting portions (Y3) and/or the corresponding grooves (X3) comprise portions of a conical surface.

18. Connection according to any one of claims 13 to 17, wherein said at least one groove (Y; Y1) does not extend across the entire height of said male part (1, 1A).

19. Connection according to any one of claims 10 to 18, wherein said male part (1, 1A) further comprises relief means (11) obtained in a base portion facing towards an occlusal region (12).

20. Connection for dental prostheses, comprising a male part (1B) provided with external coupling surfaces converging with respect to an intended axis of insertion and suitable to define, when coupling with a respective female part (2B), at least one corresponding friction surface, said male part (1B) being provided with a seat (113C) arranged to receive elastically yielding coupling means (130), wherein said seat (113C) is arranged in a region of said male part (1B) opposed to a further region in which said at least one friction surface is provided.

21. Connection according to claim 20, and further comprising said elastically yielding coupling means (130) received in said seat (113) as to press said friction surface against a corresponding further friction surface of said female part (2B).

22. Connection according to claim 21, wherein said elastically yielding coupling means (130) comprises at least one portion (130A) protruding from said seat (113C).

23. Connection according to claim 22, wherein said at least one portion (130A) is radially associated to a ring-shaped body (130B).

24. Connection according to claim 22, or 23, and further comprising fixing and adjusting screw means (152) arranged to modify the extension of said at least one portion (130A) protruding from said seat (113C).

25. Connection according to any one of claims 20 to 24, wherein said male part (1B) comprises a pillar for endosteal implant.
